# EUROPEAN PATENT SPECIFICATION

(11) **EP 2 164 775 B1**
(45) Date of publication and mention of the grant of the patent: **04.07.2018**
(21) Application number: 08762210.6
(22) Date of filing: 29.05.2008
(51) Int. Cl.: B65D 83/14, B67D 1/04, F16K 15/04

(54) **VALVE AND DISPENSER**
VENTIL UND ABGABEVORRICHTUNG
SOUPAPE ET DISTRIBUTEUR

(30) Priority: 29.05.2007 WO PCT/GB2007/001991
(43) Date of publication of application: 24.03.2010
(73) Proprietor: Copplestone-Bruce, John Merlin, Fulwood Preston Lancashire PR2 9TH (GB)
(72) Inventor: Copplestone-Bruce, John Merlin, Fulwood Preston Lancashire PR2 9TH (GB)
(74) Representative: Lawrie, Donald James
(86) International application number: PCT/GB2008/001830
(87) International publication number: WO 2008/146001

(56) References cited:
- DE-U1- 29 823 474
- US-A1- 2006 192 168

## Description

This invention relates to a valve and a dispenser comprising a valve.

Where a pressure within a volume is required to be controlled, and supplied with pressure from a source, it is known to provide an appropriate valve. Known valves however are complex, with biasing elements and control mechanisms, and not generally suitable for many applications.

DE 298 23 474 U1 relates to a valve with an inlet and an outlet, the valve having a valve element moveable between a first equilibrium position and a second open position in response to pressure at the inlet and the outlet.

US 2006/0192168 A1 relates to a ball valve that opens when suction is applied at the top of the ball and closes once the suction is removed.

According to a first aspect of the invention, we provide a valve comprising an inlet and an outlet, the valve having a valve element moveable between a first equilibrium position and a second open position, wherein when the valve element is in the first position, the inlet and the outlet are not in flow communication and when the valve element is in the second position the inlet and the outlet are in flow communication, and wherein the valve element is moveable between the first position and the second position in response to the pressure at the inlet and the outlet,
characterised in that the valve element comprises a piston having a first surface area responsive to pressure at the outlet and a second smaller surface area responsive to the pressure at the inlet, wherein the piston may be moveable in response to the net force on the first and second surface areas.

The piston may be moveable in a first bore in flow communication with the outlet and the second surface area may be provided on a rod attached to the piston and moveable in a second bore in flow communication with the inlet.

A through-bore may be provided in the rod, and an upper seal and a lower seal may be provided to provide a sliding seal between the rod and the second bore.

In the second position, an end part of the rod may be located between the upper seal and lower seal such that fluid is able to pass the lower seal, around the rod and enter the throughbore.

The valve element may be moveable to a third position in response to the pressure at the inlet and outlet wherein the inlet and outlet are not in flow communication.

The valve element may be moveable to a fourth position to permit fluid flow from the outlet to the inlet.

The valve element may move between the first position and the second position solely in response to a net force from the opposing fluid pressures at the inlet and outlet and no bias element or control element may be present to move the valve element between the first and second positions.

An example use of the valve is in a dispenser for liquid, such as an aerosol. Conventionally, such dispensers are filled with a propellant comprising a volatile organic compound such as propane, butane or ISO-butane. Such propellants have such low boiling points that that when introduced to an aerosol or cigarette lighter they comfortably remain as liquids at low pressures which boil off at low temperatures as pressure decreases when the aerosol is used. It is known that these propellants are inflammable and toxic. Inert or less harmful propellants such as nitrogen or carbon dioxide have been considered. However, for nitrogen to be a liquid requires it be held captive at some 27,6 MPa (4000 psi) and carbon dioxide at 5,6 MPa (815 psi), which is too high to be contained within conventional aerosol containers. Consequently, the expansion to pressure curve of these gases are such that when deployed in conventional aerosol canisters, where the internal pressure is conventially in the range 0,4 - 0,8 MPa (60 - 120 psi), the pressure in the container depletes too rapidly as the contents are used and the rate of discharge is reduced.

According to a second aspect of the invention, we provide a dispenser comprising a container and an nozzle to release liquid under pressure from the container, the dispenser further comprising a pressure source to supply fluid under pressure to the container, the pressure source and container being connected by a valve according to the first aspect of the invention.

The pressure source may be releasably connectable to the container.

The pressure source may comprise the valve and a pressure bottle.

The container may have a connection part to engage the pressure source, the connection part having a push rod to urge the valve element from the third position to the second position when a pressure source is engaged with the container.

The nozzle is connectable to a tube extending into the container, to permit liquid to be dispensed from the container.

The liquid may be dispensed as one of a spray, a jet or a foam. Embodiments of the invention will now be described by way of example only, with reference to the accompanying drawings, wherein;
Figure 1a is a sectional view of a valve embodying the present invention,
Figure 1b is a sectional view of the valve of Figure 1a in a second position
Figure 1c is a sectional view of the valve of Figure 1a in a third position
Figure 1d is a sectional view of the valve of Figure 1a in a fourth position,
Figure 2 is a sectional view of an alternative valve,
Figure 3 is a sectional view of a dispenser comprising the valve of figure 1,
Figure 4 is a view on a larger scale of part of the dispenser of figure 3, in a first operating position,
Figure 5 is a view on a larger scale of part of the dispenser of figure 3, in a second operating position,
Figure 6 is a view on a larger scale of part of the aerosol of figure 3, in a second operating position, and,
Figure 7 is a sectional view of a pressure canister of the dispenser of figure 3.

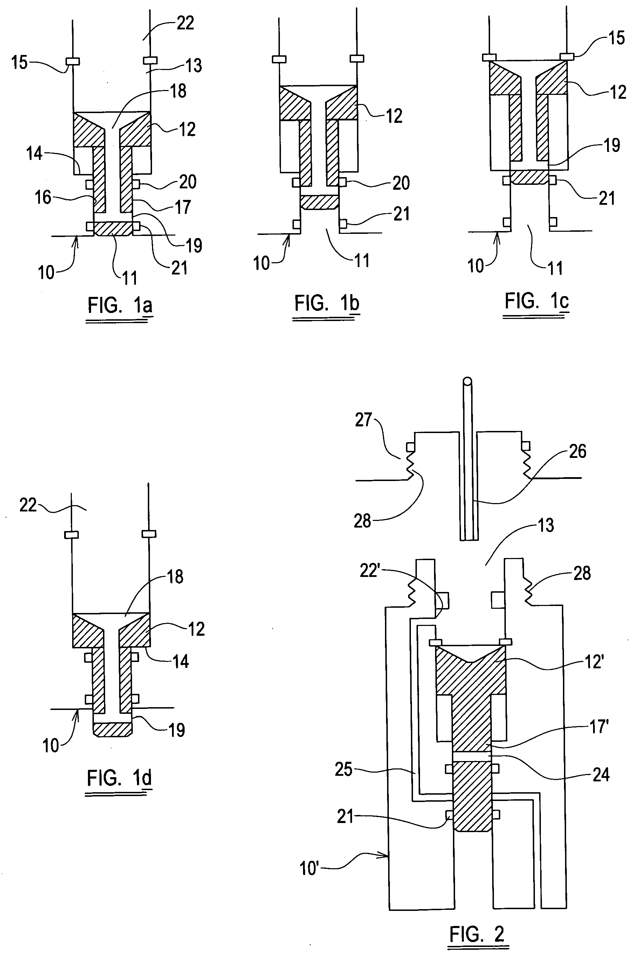

A valve embodying the present invention is generally shown at 10 in Figures 1a to 1d. The valve 10 is suitable for use in any suitable application where a controlled supply of fluid pressure is required . The valve 10 comprises an inlet 11 to which fluid under pressure is supplied. The pressurized fluid may be gas supplied from, for example, a gas canister. A piston 12 is moveable within a first bore 13, its movement being constrained in this example by an end 14 of the first bore 13 and a circlip 15. A second bore 16 having a smaller diameter than the first bore 13 extends from the first bore 13 to the inlet 11. A piston rod 17 is connected to the piston 12 and is slidably moveable within the second bore 16. A channel 18 extends from the upper face of the piston 12 through the piston rod 17 and has one or more ports 19. An upper o-ring seal 20 and a lower o-ring seal 21 supported in grooves in the second bore 16 provide a sliding seal between the piston rod 17 and the second bore 16. An upper part of the first bore 13 provides an outlet. The volume of the bore 13 between the piston 12 and the end 14 of the bore 13 is preferably at a lower pressure, for example venting to atmosphere via a suitable port (not shown). As such, the piston 12 is able to move freely in response to the net force from the different pressures at the inlet 11 and the outlet acting on the larger surface area of the piston 12 and the smaller surface area of the end of the piston rod 17.

Figure 1a shows the valve 10 in a first, equilibrium, position, where the lower pressure at the outlet and hence in the bore 13 is balanced by the higher pressure in the inlet and applied to the smaller area of the end of the rod 17. Accordingly, there is no net force on the piston 12, or insufficient net force on the piston 12 to cause the piston to move against any frictional forces such as between the seals 20, 21 and the piston rod 17.

When the pressure at the outlet falls, as shown in Figure 1b the piston 12 is forced upwards to a second, open position, as the force applied to the piston 12 will be less than the upwards force due to the higher pressure at the inlet 11 acting on the smaller area of the end of the rod 17. The piston 12 will be urged upwards, moving the lower part of the piston rod 17 out of contact with the lower O-ring 21. As the tolerance between the rod 17 and the second bore 16 will not be exact, fluid under pressure will flow through the inlet 11, the ports 19 and channel 18 into the outlet 22. When the pressure at the outlet has increased sufficiently, the downwards force on the piston 12 will exceed the upward force on the end of the rod 17, and the piston 12 will return to the first position of Figure 1a.

In a third position as shown in Figure 1c, the pressure in the first bore 13 has been completely released, or reduced to atmospheric or ambient pressure, for example due to the valve 10 being deliberately removed from a dispenser, or due to a leak or otherwise. In this case, the pressure at inlet 11 will force the piston 12 upwards until it engages circlip 15 and the ports 19 are above the upper O-ring seal 20. No fluid under pressure can then pass from the inlet 11 to the outlet 22, and so the valve 10 is in a safe condition.

Where a gas container comprises the source of fluid under pressure, the valve 10 can also be used to refill a gas container. As shown in Figure 1d, a refill pressure applied to the outlet 22 forces the piston 12 downwards until it reaches a fourth position, in this example when the piston engages the end 14 of the bore 13. The channel 18 and ports 19 provide a fluid connection allowing fluid under pressure to pass from the outlet 22 to the inlet 11. When the pressure is released from the outlet 22, the piston 12 will be urged upwards until it reaches the position shown in Figure 1c. Alternatively, rather than simply use the refill pressure to urge the piston 12 to a fourth position, a suitable physical mechanism such as a push rod can be used to move the piston 12 to the fourth position when the valve is engaged with a source of refill pressure, and permit the piston 12 to return to the third position shown in Figure 1c when the valve 10 is disconnected from the source of refill pressure. The fourth position may be defined by some other stop, such as a circlip within the bore, if it is desirable for the piston 12 not necessarily to contact the end face 14.

It will be apparent that any other suitable configuration of channels may be provided in the valve to allow for a connection between the inlet 11 and outlet. Figure 2, shows an alternative piston 12' and rod 17' in which the rod 17' is solid apart from a through-bore 24, and the rod 17' is sufficiently long that it is always in sealing contact with the lower O-ring 21. Movement of the piston 12' causes the through-bore 24 to open and close a supply channel 25 to supply fluid to an outlet 22' in flow communication with the bore 13.

When the valve 10, 10' is connection to a device such as a dispenser which is to be supplied with pressurised fluid, it will be apparent that the piston 12 will be in the third position as shown in Figure 1c. To cause the valve 10 to permit fluid under pressure to pass from the inlet 11 to the outlet of the bore 13, it is necessary for some physical element to initially move the piston12 to the second position. In the example of Figure 2, a push rod 26 is provided as part of a connector 27 on a device to which the valve 10 is attached via a threaded connection 28. As the valve 10 is screwed onto the threaded connection 28, the push rod 23 will come into contact with the piston 12, and displace the piston 12 from the closed position of Figure 1c allowing pressure to pass from the inlet 11 to the bore 13. Once the pressure within the device and hence at the bore 13 rises sufficiently, the piston 12 will move to the first, equilibrium position and subsequently operate as discussed above in response to changes in the pressure at the bore 13.

If the valve 10 is not intended to be able to permit refilling of a pressure source, then the valve may be configured such that the piston 12 is not able to move to the fourth position as shown in Figure 1d. This may be achieved, for example, by selecting the length of the rod 17 such that it cannot extend beyond the lower O-ring 21, or by limiting the range of travel of the piston 12 by the position of the end 14 of the bore 13, or providing a further circlip, or otherwise.

It will be apparent that the valve 10 may be used in any suitable application, where it is desired to supply fluid under pressure from a source at a higher pressure to a device or volume at a lower pressure. The source may be a container holding fluid under pressure, such as a gas bottle, or a pressure line, or a pump, or any other suitable source. The construction of the valve is simple, without the need for biasing or control devices, and the relative dimensions of the piston 12 and rod 17 can be selected in accordance with the desired pressure of the source and the outlet pressure. The valve 10 is suitable for miniaturisation and simple to manufacture.

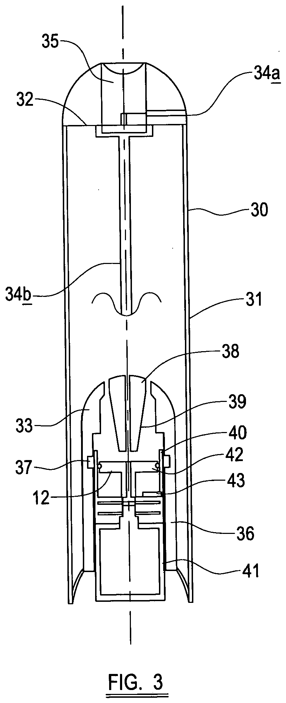

An example application of the valve will now be described with reference to Figures 3 to 7. A dispenser is shown at 30, in this example comprising an aerosol operable such that the contents of the dispenser are ejected as a mist, spray or foam, but may be any other type of dispenser as desired. The dispenser 30 comprises a container 31 for holding a liquid to be dispensed, closed by a cap 32 at the upper end of the container 31. A connection part 33 is disposed at the lower part of the container 31 to receive a source of gas pressure, as discussed in more detail below. The cap 32 has a nozzle 34a and a dip tube 34b extending into the body of the container 31. A button 35 is provided which, when pressed, connects the dip tube 34b to the nozzle 34a so that liquid is forced from the container 31 by the pressure in the container 31, through the dip tube 34a and out through the nozzle 34a.

The connection part 33 comprises a generally cylindrical body 36 with an internal seal 37. Vents 38 connect the connection part 33 to the interior of the container 31. A push rod 39 extends downwardly into the body to 36 to engage a valve 10 as discussed below.

To provide fluid under pressure to the container 31, a pressure source 40 is provided. The pressure source 40 comprises a pressure bottle 41 and a regulator 42 which includes a valve 10 as described above, the piston 12 having a seal 12a and being moveable in an end part 40a of the pressure source 40. In the regulator 42, a threaded screw 43 provides a connection to atmosphere for the volume below the piston 12. In this example, the threaded screw 43 also prevents movement of the piston 12 to the fourth position as a safety measure to prevent or hinder discharge of the pressure bottle 41 when it is not in use. When the pressure bottle 41 contains fluid under pressure and the pressure source 40 is not connected to the connection part 33, the valve 10 is in the third position as shown in Figure 1c.

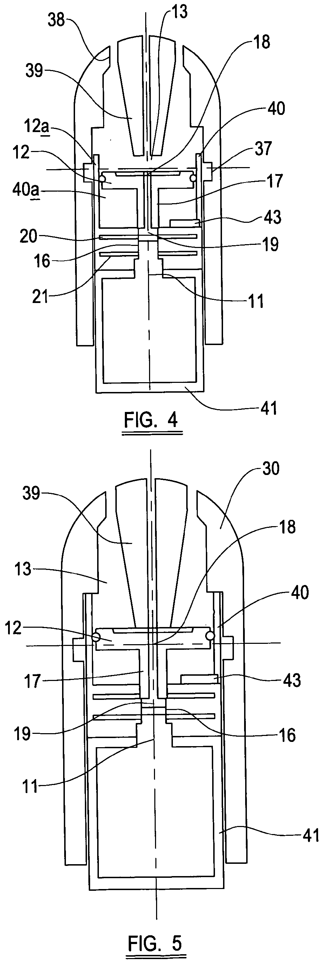

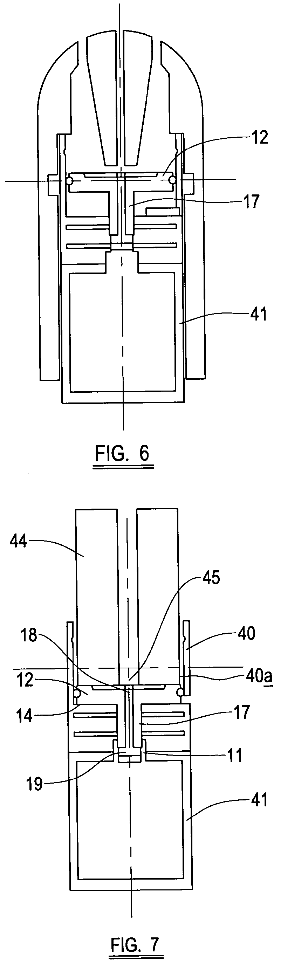

The pressure source 40 is introduced into the connection part 33 as shown in figure 4, by inserting the pressure source until it passes the seal 37. Pushing the pressure source in further brings the piston 12 into contact with the push rod 39. As described above, this urges the piston 12 away the third position and into the second position as shown in Figure 5. Fluid under pressure is supplied from the valve 10 through vents 38 into the container 31. When the container 31 reaches a suitable pressure, as set by selecting the dimensions of the piston 12 and piston rod 17 as discussed above, the piston 12 will move to the first, equilibrium position as shown in Figure 6.

Although the pressure source 40 and connection part 33 are shown located generally centrally of the container 31 and contained within the lower part of the container 31, a dispenser may be provided with the pressure source and container located and connected in any suitable manner.

It will be apparent that when the button 35 is pressed to dispense liquid from the container 31, the pressure within the container 31 will fall. Accordingly, the piston 12 will be forced upwards and fluid under pressure will be supplied into the container 31 until an equilibrium pressure is once again achieved.

When it is desired to refill the pressure bottle 41, the threaded screw 43 is removed or sufficiently withdrawn to permit movement of the piston 12 to the fourth position. The valve 10 can then be engaged with a suitable refilling nozzle 44 which urges the piston 12 to the fourth position as shown in Figure 7. Pressure is supplied from a channel 45 of the nozzle 44 through bore 18 and outlet 19 into the pressure bottle 41. When it is desired to refill the container 31, the cap 32 or the connection part 33 can be removed to permit liquid to be introduced to the container 31, and then closed with a suitable liquid- and pressure-tight seal. Alternatively, if suitable the liquid to be dispensed may be introduced into the container 31 through vents 38 prior to inserting the pressure source 40.

It will be apparent that the dispenser is advantageous in that it allows an aerosol or dispenser to be provided which is capable of being refilled with both the liquid to be dispensed and propellant. Accordingly, this provides substantial advantages over known aerosols where the entire container must be thrown away, representing a substantial waste of resources, once the contents have been discharged.

The dispenser is also advantageous as the use of the valve 10 permits nitrogen or carbon dioxide to be reliably used. Nitrogen or carbon dioxide will not have the environmentally damaging effects of known propellants and are comparatively cheap to produce and distribute. Nitrogen and carbon dioxide are also inert, relatively inexpensive and will not have the risks associated with known flammable propellants. For example, to provide a pressure within the container of approximately 75 - 250 psi, the pressure source can contain liquid nitrogen at approximately 4000 psi. The areas of the piston and the rod would be selected so that the valve element moves to its first, equilibrium position when these pressures are applied to the outlet and inlet of the valve 10 respectively. I cc of liquid nitrogen would give 696.5 cc as a gas at 70C. A pressure source with a volume of 12 cc could therefore provide propellant for approximately 10 discharges of the dispenser.

It will be apparent that the pressure source, comprising a pressure bottle and a valve 10, may be used separately, for any suitable function.

When used in this specification and claims, the terms "comprises" and "comprising" and variations thereof mean that the specified features, steps or integers are included. The terms are not to be interpreted to exclude the presence of other features, steps or components.

## Claims

1. A valve 10 comprising an inlet 11 and an outlet 22, the valve having a valve element moveable between a first equilibrium position and a second open position, wherein when the valve element is in the first position, the inlet and the outlet are not in flow communication and when the valve element is in the second position the inlet and the outlet are in flow communication, and wherein the valve element is moveable reversibly from the first position to the second position in response to a net force from the opposing fluid pressures at the inlet and the outlet,
**characterised in that**
the valve element comprises a piston 12 having a first surface area responsive to fluid pressure at the outlet and a second smaller surface area responsive to fluid pressure at the inlet, wherein the piston is moveable in response to the net force on the first and second surface areas.

2. A valve 10 according to claim 1 wherein the piston 12 is moveable in a first bore 13 in flow communication with the outlet 22 and the second surface area is provided on a rod 17 attached to the piston and moveable in a second bore 16 in flow communication with the inlet 11.

3. A valve 10 according to claim 2 wherein a through-bore 24 is provided in the rod 17, and an upper seal and a lower seal are provided to provide a sliding seal between the rod and the second bore 16.

4. A valve according to claim 3 wherein, in the second position, an end part of the rod 17 is located between the upper seal 20 and lower seal 21 such that fluid is able to pass the lower seal, around the rod and enter the throughbore 24.

5. A valve 10 according to any one of the preceding claims wherein the valve element is moveable to a third position in response to the net force from the opposing fluid pressures at the inlet 11 and outlet 22 wherein the inlet and outlet are not in flow communication.

6. A valve 10 according to any one of the preceding claims wherein the valve element is moveable to a fourth position to permit fluid flow from the outlet 22 to the inlet 11.

7. A valve 10 according to any one of the preceding claims wherein the valve element is moveable between the first position and the second position solely in response to a net force from the opposing fluid pressures at the inlet 11 and outlet 22 and no bias element or control element is present to move the valve element between the first and second positions.

8. A dispenser 30 comprising a container 31 and a nozzle 34a to release liquid under pressure from the container, the dispenser further comprising a pressure source 40 to supply fluid under pressure to the container, the pressure source and container being connected by a valve 10 according to any one of the preceding claims.

9. A dispenser 30 according to claim 8 wherein the pressure source 40 is releasably connectable to the container 31.

10. A dispenser 30 according to claim 9 wherein the pressure source 40 comprises the valve 10 and a pressure bottle 41.

11. A dispenser 30 according to claim 10 where dependent indirectly on claims 4, wherein the container 31 has a connection part to engage the pressure source 40, the connection part having a push rod 39 to urge the valve element from the third position to the second position when a pressure source is engaged with the container.

12. A dispenser 30 according to any one of claims 8 to 11 wherein the nozzle is connectable to a tube extending into the container, to permit liquid to be dispensed from the container.

13. A dispenser 30 according to any one of claims 8 to 12 wherein the liquid is dispensed as one of a spray, a jet or a foam.

## Patentansprüche

1. Ventil 10, umfassend einen Einlass 11 und einen Auslass 22, wobei das Ventil über ein Ventilelement verfügt, das zwischen einer ersten Gleichgewichtsstellung und einer zweiten offenen Stellung bewegbar ist, wobei Einlass und Auslass, wenn sich das Ventilelement in der ersten Stellung befindet, in keiner Strömungsverbindung stehen, und Einlass und Auslass, wenn das Ventilelement sich in der zweiten Stellung befindet, in einer Strömungsverbindung stehen, und wobei das Ventilelement umgekehrt als Reaktion auf eine resultierende Kraft aus den entgegengesetzten Flüssigkeitsdrücken am Einlass und Auslass aus der ersten Stellung in die zweite Stellung bewegt wird,
**dadurch gekennzeichnet, dass**
das Ventilelement einen Kolben 12 mit einem ersten Oberflächenbereich umfasst, der auf Flüssigkeitsdruck am Auslass reagiert, und einen zweiten kleineren Oberflächenbereich umfasst, der auf Flüssigkeitsdruck am Einlass reagiert, wobei der Kolben in Reaktion auf die resultierende Kraft auf den ersten und zweiten Oberflächenbereich bewegbar ist.

2. Ventil 10 gemäß Anspruch 1, wobei der Kolben 12 in einer ersten Bohrung 13 bewegbar ist, die in Strömungsverbindung mit dem Auslass 22 steht, und wobei der zweite Oberflächenbereich auf einer Stange 17 bereitgestellt ist, die am Kolben angebracht ist und in einer zweiten Bohrung 16 bewegbar ist, die in Strömungsverbindung mit dem Einlass 11 steht.

3. Ventil 10 gemäß Anspruch 2, wobei eine Durchgangsbohrung 24 in der Stange 17 bereitgestellt ist und eine obere Dichtung und eine untere Dichtung bereitgestellt sind, um eine Gleitdichtung zwischen der Stange und der zweiten Bohrung 16 bereitzustellen.

4. Ventil gemäß Anspruch 3, wobei sich in der zweiten Stellung ein Endstück der Stange 17 zwischen der oberen Dichtung 20 und der unteren Dichtung 21 befindet, sodass Flüssigkeit die untere Dichtung rund um die Stange passieren und in die Durchgangsbohrung 24 eintreten kann.

5. Ventil 10 gemäß einem der vorherigen Ansprüche, wobei das Ventilelement in Reaktion auf die resultierende Kraft aus den entgegengesetzten Flüssigkeitsdrücken am Einlass 11 und am Auslass 22 in eine dritte Stellung bewegbar ist, wobei Einlass und Auslass nicht in Strömungsverbindung stehen.

6. Ventil 10 gemäß einem der vorherigen Ansprüche, wobei das Ventilelement in eine vierte Stellung bewegbar ist, damit ein Flüssigkeitsstrom vom Auslass 22 zum Einlass 11 möglich ist.

7. Ventil 10 gemäß einem der vorherigen Ansprüche, wobei das Ventilelement zwischen der ersten Stellung und der zweiten Stellung nur in Reaktion auf eine resultierende Kraft aus den entgegengesetzten Flüssigkeitsdrücken am Einlass 11 und am Auslass 22 bewegbar ist und kein Spannelement oder Steuerelement vorhanden ist, das das Ventilelement zwischen der ersten und der zweiten Stellung bewegt.

8. Spender 30, umfassend einen Behälter 31 und eine Düse 34a zur Freisetzung von Flüssigkeit unter Druck aus dem Behälter, wobei der Spender darüber hinaus eine Druckquelle 40 zur Lieferung von Flüssigkeit unter Druck an den Behälter umfasst, wobei die Druckquelle und der Behälter über ein Ventil 10 gemäß einem der vorherigen Ansprüche verbunden sind.

9. Spender 30 gemäß Anspruch 8, wobei die Druckquelle 40 lösbar mit dem Behälter 31 verbunden ist.

10. Spender 30 gemäß Anspruch 9, wobei die Druckquelle 40 das Ventil 10 und eine Druckflasche 41 umfasst.

11. Spender 30 gemäß Anspruch 10, soweit indirekt abhängig von Anspruch 4, wobei der Behälter 31 ein Verbindungsstück besitzt, um die Druckquelle 40 einzubeziehen, wobei das Verbindungsstück über einen Stößel 39 verfügt, um das Ventilelement aus der dritten Stellung in die zweite Stellung zu drücken, wenn eine Druckquelle mit dem Behälter in Eingriff steht.

12. Spender 30 gemäß einem der Ansprüche 8 bis 11, wobei die Düse an einen Schlauch anschließbar ist, der sich in den Behälter erstreckt, damit die Flüssigkeit aus dem Behälter abgegeben werden kann.

13. Spender 30 gemäß einem der Ansprüche 8 bis 12, wobei die Flüssigkeit in Form von Sprühnebel, Strahl oder Schaum abgegeben wird.

## Revendications

1. Valve 10 comprenant une entrée 11 et une sortie 22, la valve ayant un élément de valve amovible entre une première position d'équilibre et une deuxième position ouverte, dans laquelle quand l'élément de valve est dans la première position, l'entrée et la sortie ne sont pas en communication d'écoulement et quand l'élément de valve est dans la deuxième position, l'entrée et la sortie sont en communication d'écoulement, et où l'élément de valve est amovible de manière réversible de la première position à la deuxième position en réponse à une force nette de pressions de fluide en opposition à l'entrée et à la sortie,
**caractérisée en ce que**
l'élément de valve comprend un piston 12 ayant une première surface sensible à la pression de fluide à la sortie et une seconde surface plus petite sensible à la pression de fluide à l'entrée, où le piston est amovible en réponse à la force nette sur les première et seconde surfaces.

2. Valve 10 selon la revendication 1 dans laquelle le piston 12 est amovible dans un premier trou 13 en communication d'écoulement avec la sortie 22 et la seconde surface est fournie sur une tige 17 attachée au piston et amovible dans un second trou 16 en communication d'écoulement avec l'entrée 11.

3. Valve 10 selon la revendication 2 dans laquelle un trou de passage 24 est fourni dans la tige 17, et un joint supérieur et un joint inférieur sont fournis pour créer un joint de glissement entre la tige et le second trou 16.

4. Valve selon la revendication 3 dans laquelle, dans la seconde position, une partie d'extrémité de la tige 17 est située entre le joint supérieur 20 et le joint inférieur 21 de telle manière qu'un fluide est capable de passer le joint inférieur, autour de la tige et d'entrer dans le trou de passage 24.

5. Valve 10 selon l'une quelconque des revendications précédentes dans laquelle l'élément de valve est amovible à une troisième position en réponse à la force nette des pressions de fluide en opposition à l'entrée 11 et à la sortie 22 où l'entrée et la sortie ne sont pas en communication d'écoulement.

6. Valve 10 selon l'une quelconque des revendications précédentes dans laquelle l'élément de valve est amovible à une quatrième position pour permettre l'écoulement de fluide de la sortie 22 à l'entrée 11.

7. Valve 10 selon l'une quelconque des revendications précédentes dans laquelle l'élément de valve est amovible entre la première position et la deuxième position en réponse à une force nette des pressions de fluide en opposition à l'entrée 11 et à la sortie 22 et aucun élément d'inclinaison ou élément de contrôle n'est présent pour déplacer l'élément de valve entre les première et deuxième positions.

8. Distributeur 30 comprenant un récipient 31 et une buse 34a pour libérer le liquide sous pression du récipient, le distributeur comprenant en outre une source de pression 40 pour fournir un fluide sous pression au récipient, la source de pression et le récipient étant connectés par une valve 10 selon l'une quelconque des revendications précédentes.

9. Distributeur 30 selon la revendication 8 dans lequel la source de pression 40 est connectable de manière détachable au récipient 31.

10. Distributeur 30 selon la revendication 9 dans lequel la source de pression 40 comprend la valve 10 et une bouteille de pression 41.

11. Distributeur 30 selon la revendication 10 où elle dépend indirectement de la revendication 4, dans lequel le récipient 31 a une partie de connexion pour engager la source de pression 40, la partie de connexion ayant une tige de poussée 39 pour pousser l'élément de valve de la troisième position à la deuxième position quand une source de pression est engagée avec le récipient.

12. Distributeur 30 selon l'une quelconque des revendications 8 à 11 dans lequel la buse est connectable à un tube s'étendant dans le récipient, pour permettre au liquide d'être distribué à partir du récipient.

13. Distributeur 30 selon l'une quelconque des revendications 8 à 12 dans lequel le liquide est distribué sous forme d'un spray, d'un jet ou d'une mousse.
